# EUROPÄISCHE PATENTSCHRIFT

(11) **EP 2 433 099 B1**
(45) Veröffentlichungstag und Bekanntmachung des Hinweises auf die Patenterteilung: **15.03.2017**
(21) Anmeldenummer: 10721334.0
(22) Anmeldetag: 19.05.2010
(51) Int. Cl.: G01D 3/032, G01D 5/244

(54) **VERFAHREN ZUR BESTIMMUNG DER WINKELSTELLUNG EINES DREHBAREN TEILS**
METHOD OF DETERMINING THE ANGULAR POSITION OF A ROTARY PART
PROCÉDÉ POUR DÉTERMINER LA POSITION ANGULAIRE D'UNE PARTIE ROTATIVE

(30) Priorität: 20.05.2009 DE 102009022084
(43) Veröffentlichungstag der Anmeldung: 28.03.2012
(73) Patentinhaber: SEW-EURODRIVE GmbH & Co. KG, 76646 Bruchsal (DE)
(72) Erfinder: SIMON, Olaf, 76646 Bruchsal (DE); MAHLEIN, Jochen, 76139 Karlsruhe (DE); QUADT, Steffen, 76139 Karlsruhe (DE); MÜLLER, Michael, 76185 Karlsruhe (DE)
(86) Internationale Anmeldenummer: PCT/EP2010/003092
(87) Internationale Veröffentlichungsnummer: WO 2010/133363

(56) Entgegenhaltungen:
- EP-A1- 0 599 175
- EP-A1- 0 704 678
- DE-T5-112007 000 005
- US-A1- 2009 034 641

## Beschreibung

Die Erfindung betrifft ein Verfahren zur Bestimmung der Winkelstellung eines drehbaren Teils.

Winkelsensoren sind allgemein bekannt.

Aus der DE 11 2007 000 005 T5 ist ein Schaltkreis zur Phasenkorrektur eines Messgeber-Signals bekannt.

Aus der EP 0 704 678 A1 ist ein Verfahren zur Bestimmung eines Verschiebungsbetrags bekannt.

Aus der US 2009/0034641 A1 ist ein Verfahren für eine dynamische Kalibrierung eines Quadratur-Encoders bekannt.

Der Erfindung liegt die Aufgabe zugrunde, eine Winkelerfassung zu verbessern.

Erfindungsgemäß wird die Aufgabe bei dem Verfahren nach den in Anspruch 1 angegebenen Merkmalen gelöst.

Wichtige Merkmale der Erfindung bei dem Verfahren zur Bestimmung der Winkelstellung eines drehbaren Teils sind, dass es zumindest eine in Umfangsrichtung verlaufende Geberspur aufweist,
wobei zumindest zwei Sensoren mit einem derartigen Winkelversatz stationär angeordnet sind, dass die zugehörigen Signalverläufe bei Drehung des drehbaren Teils eine Phasendifferenz aufweisen, die bis auf einen Phasenfehler einem definierten Idealwert, beispielsweise 90°, entspricht,
wobei
insbesondere zumindest für eine Periode eines Signalverlaufs,
- Offsetwerte der Signalverläufe bestimmt und korrigiert werden,
- die Signalverläufe derart weiter korrigiert werden, dass sie die gleichen Spitzenwerte aufweisen,
- der Phasenfehler bestimmt wird und zumindest ein Signalverlauf entsprechend weiter korrigiert wird,
- aus den beiden korrigierten Signalverläufen der Winkelwert der Winkelstellung des drehbaren Teils bestimmt wird.

Von Vorteil ist dabei, dass eine fehlerkorrigierte und somit verbesserte Winkelbestimmung erreichbar ist.

Erfindungsgemäß werden die Offsetwerte und/oder die Phasenfehlerwerte tiefpassgefiltert. Von Vorteil ist dabei, dass ein einfach ausführbarer Verfahrensschritt genügt, um die Signale im Offset und bezüglich der Amplituden, also der Verstärkungen, zu korrigieren und ein sich dem Fehler langsam adaptierendes Verfahren entsteht.

Bei einer vorteilhaften Ausgestaltung wird der Phasenfehler an der Stelle der Wertegleichheit der beiden Amplituden- und Offset-korrigierten Signale bestimmt. Von Vorteil ist dabei, dass ein in einfacher und trotzdem genauer Weise bestimmbarer Wert verwendbar ist.

Erfindungsgemäß wird zum Korrigieren des Phasenfehlers eine lineare Überlagerung der beiden Signalverläufe, umfassend einen ersten und einen zweiten Signalverlauf, als zweiter Signalverlauf bestimmt, wobei dieser und der erste Signalverlauf zur Bestimmung des Winkelwertes der Winkelstellung verwendet wird. Von Vorteil ist dabei, dass ein besonders einfaches und schnell ausführbares Rechenverfahren zur Korrektur der Werte ausreicht. Wichtig bei einer Vorrichtung zur Durchführung eines vorgenannten Verfahrens ist, dass die Scheibe in Umfangsrichtung hintereinander magnetisierte Bereiche aufweist, wobei benachbarte Bereiche im Wesentlichen entgegengesetzte Magnetisierungsrichtungen aufweisen. Von Vorteil ist dabei, dass eine einfache robuste Anordnung ausführbar ist, die in einem Elektromotor einsetzbar ist.

Erfindungsgemäß bilden die Bereiche eine Maßverkörperung. Von Vorteil ist dabei, dass eine genaue Winkelbestimmung ermöglicht ist.

Weitere Vorteile ergeben sich aus den Unteransprüchen.

Die Erfindung wird nun näher erläutert:
Bei einem ersten erfindungsgemäßen Ausführungsbeispiel werden an einer drehenden Scheibe zwei in Umfangsrichtung verlaufende Geberspuren vorgesehen, denen jeweils zumindest zwei Sensoren zugeordnet sind, die einen derartigen Winkelversatz zueinander aufweisen, dass zueinander um etwa 90° verschobene Signalverläufe erzeugbar sind bei Drehung der Scheibe. Ohne Berücksichtigung von kleinen Abweichungen entsprechen dann die beiden Signalverläufe ungefähr einem Sinus und Cosinus. Die Geberspuren bestehen aus in Umfangsrichtung aufeinander folgende, in axialer Richtung jeweils unterschiedlich magnetisierten Bereichen.

Bei einem zweiten erfindungsgemäßen Ausführungsbeispiel wird nur eine Spur verwendet und die beiden Sensoren weisen ebenfalls einen solchen Winkelversatz ihrer Signalverläufe auf. Dabei sind die magnetisierten Bereiche im Wesentlichen tortenstückartig ausgebildet, wobei die jeweils zueinander benachbarten "Tortenstücke" in axialer Richtung magnetisiert sind mit im Wesentlichen jeweils unterschiedlicher Magnetisierungsrichtung. Die in Umfangsrichtung bestehende Breite des Sensors und der Verlauf Magnetisierung ist möglichst derart ausgeführt, dass der Sensor einen sinusartigen Signalverlauf in Abhängigkeit vom Drehwinkel der Scheibe erzeugt. Als Sensor ist vorzugsweise ein Hall-Sensor verwendet. Es sind aber auch andere Magnetfeld-detektierende Sensoren verwendbar.

Der Winkelabstand der beiden Sensoren entspricht ungefähr einem ungeradzahligen Vielfachen eines Viertels der Periode in Umfangsrichtung des Magnetisierungsverlaufs in einer Spur.

Beim Positionieren der Sensoren sind kleine Fehler zumindest im Winkelabstand oder in der Lage bezüglich des Polrades unvermeidlich. Mit der Erfindung wird ein aufwendiger Einmessvorgang vermieden. Dies wird durch ein adaptives Verfahren bewirkt, das eine selbstlernende Eigenschaft aufweist.

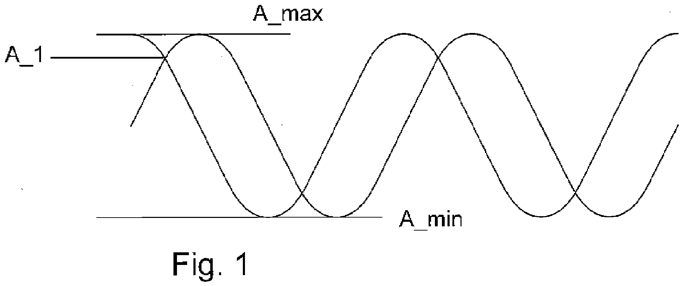

Der Signalverlauf der beiden Sensoren ist in Figur 1 skizziert. Dabei sind A_min der Minimalwert eines Spursignals und A_max der Maximalwert des Spursignals. An einer ungefähr einem Winkel in Umfangsrichtung von 45° entsprechenden Stelle beträgt der Signalbetrag A_1, wobei beide Signale hier gleich groß sind.

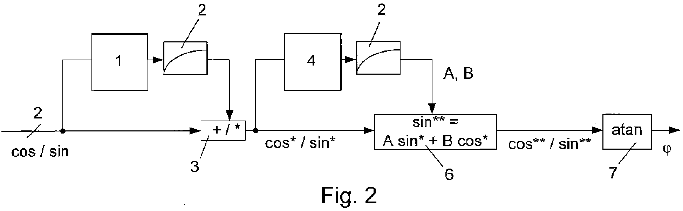

Das Verfahren zur Bestimmung der Winkelstellung umfasst dabei die in Figur 2 gezeigten Schritte:
Zunächst wird im Signalverlauf eines Sensors eine Periode bestimmt. Hierzu ist der Auswerteelektronik die Gesamtanzahl der Perioden in Umfangsrichtung bekannt.

Danach wird der Offset und die Amplitude des Signalverlaufs für diese bestimmte Periode bestimmt. Der Wert wird tiefpassgefiltert und das so erhaltene Signal vom erfassten Signalverlauf subtrahiert. Dies ist in Block 3 symbolisiert. Außerdem werden dem Block 3 die Signalverläufe beider Sensoren zugeführt und die Verstärkungsfaktoren derart korrigiert durch Multiplikation mit einem Parameter, dass die der innerhalb der Periode auftretende Maximalwert und der Minimalwert beider Signalverläufe gleich groß sind.

Zur Bestimmung eines Phasenfehlers, der beispielsweise durch eine in Umfangsrichtung fehlerhafte Beabstandung der Sensoren verursacht ist, wird der Signalwert, also die Amplitude, an der Stelle der Wertegleichheit bestimmt und aus dem Vergleich mit der Signalamplitude der Phasenfehler bestimmt. Beispielsweise könnte dies erfolgen durch Bilden eines zum erfassten Amplitudenwert gehörigen Arcuscosinuswertes, von dem 45° subtrahiert werden. Vorzugsweise werden jedoch die Quadrate der Signalamplituden beider Spuren addiert und aus der Summe die Quadratwurzel gezogen, wobei die Abweichung vom Wert 1 vom Phasenfehler abhängt.

Auf diese Weise oder eine mathematisch äquivalente Weise ist der Wert des Phasenfehlers bestimmt und die Phase des zugehörigen Signalverlaufs wird mit diesem Wert korrigiert. Um wenig Rechenaufwand zu erreichen, ist dies durch eine lineare Überlagerung der beiden Signalverläufe ausführbar, wobei die zugehörigen Koeffizienten A und B der linearen Überlagerung dem Sinuswert und Cosinuswert des Phasenfehlers entsprechen, also die Bedingung A^2 + B^2 = 1 erfüllen. Diese lineare Überlagerung der beiden Signalverläufe zur Korrektur des Winkelfehlers ist in Block 6 dargestellt.

Nachfolgend wird in Block 7 der Quotient des korrigierten Signalverlaufs des zweiten Sensors zum Signalverlauf des ersten Sensors gebildet und sodann der Arcustangens zur Bestimmung des Winkelwertes der Winkelstellung der Scheibe.

Die Scheibe ist vorzugsweise mit einem Rotor eines Elektromotors verbunden. Somit ist ein geregelter Betrieb des Motors ausführbar. Insbesondere ist die Scheibe mit den Sensoren im Gehäuse des Elektromotors unterbringbar und somit die Auswerteelektronik in einem Umrichter integrierbar, der vorzugsweise im Gehäuse des Motors umfasst ist.

Statt der Tiefpassfilterung, also einer Art Bildung eines gleitenden Mittelwertes, ist auch eine Mittelwertbildung der Werte des nur zu einer Periode gehörenden Winkelbereichs ausführbar, also der nach einer Umdrehung erhältlichen Werte. Somit wird eine Beeinflussung durch benachbarte Werte vermieden.

Zur weiteren Verfeinerung ist auch eine Offsetbestimmung für jede Periode ermöglicht, wobei eine Sinusfunktion an die Offsetwerte angefittet wird, der die Periodenlänge einer ganzen Umdrehung der Scheibe hat. Auf diese Weise sind sogar Schwebungen eliminierbar.

Bei weiteren erfindungsgemäßen Ausführungsbeispielen werden die Korrekturkoeffizienten für jede Periode der Polscheibe getrennt bestimmt. Dies kann durch Vervielfältigung der beschriebenen Korrekturstruktur für jede Periode des Polrings geschehen, die jeweils nacheinander, also nach dem Verstreichen einer Signalperiode, aktiviert werden.

Bei weiteren erfindungsgemäßen Ausführungsbeispielen werden die erlernten Korrekturkoeffizienten in einem nicht flüchtigen Speicher abgelegt, so dass diese beim Wiedereinschalten der Messeinrichtung sofort wieder zu Verfügung stehen.

Bei weiteren erfindungsgemäßen Ausführungsbeispielen bestehen die Geberspuren aus in Umfangsrichtung aufeinander folgende, in radialer und/oder axialer Richtung jeweils unterschiedlich magnetisierten Bereichen.

### Bezugszeichenliste

A_min Minimalwert beider Spursignale
A_max Maximalwert beider Spursignale
A_1 Signalbetrag bei Wertegleichheit
   1 Offsetbestimmung
   2 Tiefpass
   3 Verstärkungskorrektur
   4 Phasenfehlerbestimmung
   5 Tiefpass
   6 Phasenkorrektur
   7 Winkelbestimmung

## Patentansprüche

1. Verfahren zur Bestimmung der Winkelstellung eines drehbaren Teils, welches zumindest eine in Umfangsrichtung verlaufende Geberspur aufweist,
wobei zumindest zwei Sensoren mit einem derartigen Winkelversatz stationär angeordnet sind, dass die zugehörigen Signalverläufe (cos / sin) bei Drehung des drehbaren Teils eine
Phasendifferenz aufweisen, die bis auf einen Phasenfehler einem vorgebbaren Idealwert entsprechen,
wobei
- Offsetwerte der Signalverläufe bestimmte (1) und korrigiert (3) werden,
- die Signalverläufe derart weiter korrigiert werden (3), dass sie die gleichen Spitzenwerte aufweisen,
- der Phasenfehler bestimmt wird (4) und zumindest ein Signalverlauf entsprechend weiter korrigiert wird,
- aus den beiden korrigierten Signalverläufen der Winkelwert (ϕ) der Winkelstellung des drehbaren Teils bestimmt wird (7),
wobei die Offsetwerte und/oder die Phasenfehlerwerte tiefpassgefiltert (2) werden,
wobei zum Korrigieren des Phasenfehlers eine lineare Überlagerung (6) der beiden
Signalverläufe, umfassend einen ersten und einen zweiten Signalverlauf, als zweiter Signalverlauf bestimmt wird, wobei dieser und der erste Signalverlauf zur Bestimmung des Winkelwertes der Winkelstellung verwendet werden,
wobei die Scheibe in Umfangsrichtung hintereinander axial magnetisierte Bereiche aufweist, wobei benachbarte Bereiche im Wesentlichen entgegengesetzte Magnetisierungsrichtungen aufweisen,
wobei die Bereiche eine Maßverkörperung bilden.

2. Verfahren nach Anspruch 1,
**dadurch gekennzeichnet, dass**
der Phasenfehler an der Stelle der Wertegleichheit der beiden korrigierten Signale bestimmt wird.

3. Verfahren nach Anspruch 1 oder 2,
**dadurch gekennzeichnet, dass**
die zugehörigen Signalverläufe bei Drehung des drehbaren Teils eine Phasendifferenz von 90° aufweisen.

## Claims

1. Method for determining the angular position of a rotatable part which has at least one encoder track running in the circumferential direction,
wherein at least two sensors are stationarily arranged with such an angular offset that the associated signal waveforms (cos/sin) upon rotation of the rotatable part have a phase difference which correspond to a predeterminable ideal value, except for a phase error,
wherein
- offset values of the signal waveforms are determined (1) and corrected (3),
- the signal waveforms are further corrected (3) such that they have the same peak values,
- the phase error is determined (4) and at least one signal waveform is correspondingly further corrected,
- from the two corrected signal waveforms the angular value (ϕ) of the angular position of the rotatable part is determined (7),
wherein the offset values and/or phase error values are lowpass filtered (2),
wherein for correcting the phase error a linear superposition (6) of the two signal waveforms, comprising a first and a second signal waveform, is determined as the second signal waveform, wherein the latter and the first signal waveform are used for the determination of the angular value of the angular position,
wherein the disc has in the circumferential direction one after the other axially magnetised regions, wherein adjacent regions have substantially opposite magnetisation directions,
wherein the regions form a measurement standard.

2. Method according to claim 1,
**characterised in that**
the phase error is determined at the location of the equality of values of the two corrected signals.

3. Method according to claim 1 or 2,
**characterised in that**
the associated signal waveforms upon rotation of the rotatable part have a phase difference of 90°.

## Revendications

1. Procédé de détermination de la position angulaire d'une pièce rotative dotée d'au moins une piste de codeur s'étendant dans la direction périphérique,
au moins deux capteurs occupant des positions stationnaires, avec un décalage angulaire tel que les allures de signaux associées (cos/sin) présentent, lors d'une rotation de ladite pièce rotative, une différence de phase correspondant à une valeur idéale pouvant être préétablie, abstraction faite d'une erreur de phase,
sachant que
- des valeurs de décalage des allures de signaux sont déterminées (1) et corrigées (3),
- lesdites allures de signaux sont ensuite corrigées (3) de façon telle qu'elles présentent les mêmes valeurs de crête,
- l'erreur de phase est déterminée (4), et au moins une allure de signal est ensuite corrigée de manière correspondante,
- la valeur angulaire (ϕ) de la position angulaire de ladite pièce rotative est déterminée (7) sur la base des deux allures de signaux corrigées,
les valeurs de décalage et/ou les valeurs d'erreur de phase étant soumises à un filtrage passe-bas (2),
sachant qu'en vue de corriger ladite erreur de phase, une superposition linéaire (6) des deux allures de signaux, incluant des première et seconde allures de signaux, est déterminée en tant que seconde allure de signal, cette dernière, et ladite première allure de signal, étant utilisées pour déterminer ladite valeur angulaire de la position angulaire,
le disque comportant des régions magnétisées axialement, qui sont agencées en succession dans la direction périphérique, des régions voisines présentant des directions de magnétisation substantiellement opposées,
lesdites régions formant un étalon de mesure.

2. Procédé selon la revendication 1,
**caractérisé par le fait que**
l'erreur de phase est déterminée au point d'équivalence des deux signaux corrigés.

3. Procédé selon la revendication 1 ou 2,
**caractérisé par le fait que**
les allures de signaux associées présentent une différence de phase de 90° lors d'une rotation de la pièce rotative.
